Europäisches Patentamt

European Patent Office

Office européen des brevets

(19)

(11) Publication number: **0 121 390**
**B1**

(12) **EUROPEAN PATENT SPECIFICATION**

(45) Date of publication of patent specification: **28.09.88**

(51) Int. Cl.⁴: **B 65 G 47/22,** B 65 G 47/24, B 23 P 19/04

(21) Application number: **84302010.8**

(22) Date of filing: **26.03.84**

(54) Flexible handling of components for manufacture.

(30) Priority: **30.03.83 GB 8308826**

(43) Date of publication of application:
**10.10.84 Bulletin 84/41**

(45) Publication of the grant of the patent:
**28.09.88 Bulletin 88/39**

(84) Designated Contracting States:
**DE FR GB IT**

(56) References cited:
**DE-A-2 401 600**
**DE-A-3 027 555**
**DE-A-3 033 686**
**GB-A-1 272 709**

(73) Proprietor: **NATIONAL RESEARCH DEVELOPMENT CORPORATION**
**101 Newington Causeway**
**London SE1 6BU (GB)**

(72) Inventor: **Dewhurst, Richard James**
**225 Cottingham Road**
**Hull North Humberside (GB)**
Inventor: **Swift, Kenneth Geoffrey**
**19 Longcroft Park**
**Molescroft Beverly North Humberside (GB)**

(74) Representative: **Hasler, Christopher**
**Patent Department National Research**
**Development Corporation 101 Newington**
**Causeway**
**London SE1 6BU (GB)**

Courier Press, Leamington Spa, England.

## Description

The present invention relates to methods and apparatus for handling components of different types where the components are to be presented at a delivery point in a sequence of certain types and/or in certain orientations.

Some problems which arise in ensuring that components have a required orientation have been described in U.K. Patent Application No. 2 116 705A published 23.9.1983 where a relatively inexpensive device is described for this purpos.e The device is preferably for use with a vibratory bowl feeder when only simple modifications are required.

West German Patent Application 30 27 555 A (Offenlegungsschrift published 11 February 1982) describes a rotary device for feeding identical components in a required orientation. The components are fed on to a rotary table where they are thrown against a lip by centrifugal force and then their orientation is deduced from the output of an array of sensors. The sensors may be photodiodes when the orientation is preferably deduced by the way in which light from a light source is interrupted as the components move between the photodiodes and the source.

According to a first aspect of the present invention there is provided a method of handling objects, comprising

feeding the objects sequentially towards a delivery point, in such a manner that each object assumes any one of a small number of different stable orientations;

subjecting each object before it reaches the delivery point to an optical test in which the object is illuminated by a beam of light while it moves relative to the light beam, and in which an output is derived from a photoelectric detection system responsive to light which is scattered and/or reflected by objects so illuminated, and

treating the objects to ensure that they reach the delivery point in a predetermined orientation only,

characterised in that the objects are different types of components for manufacture, the form of the said output differs significantly according to the type of component and, for at least one type, whether it has a particular one of said orientations, and in that the method includes treating the components in accordance with the results of the tests to ensure that only those components which are of a selected one or more types and, for the said one type, in the said particular one of said orientations, reach the delivery point.

An advantage of the present invention is that relatively simple and inexpensive optical and electrical techniques can be used for selecting components of certain types from a mixture and presenting at least one type in a required orientation. If several different types of components have a small number of possible orientations then components of each of these types can be orientated.

In some applications components are required to arrive at a delivery point in a selected sequence. For example if integrated circuits are to be inserted into a board then the machine for inserting the components requires that they arrive in a certain order and with a certain orientation. By using the method of the invention to recognise components and their orientation, the required sequence of components can be achieved for example by rejecting any component which is not in the correct sequence and does not have the required orientation.

According to a second aspect of the present invention there is provided apparatus for use in handling objects comprising

means for feeding components sequentially towards a delivery point in such a manner that at least one type of component assumes any one of a small number of different stable orientations,

means for projecting a beam of light to illuminate components as they move towards the delivery point, a photoelectric detection system responsive to light scattered and/or reflected by components so illuminated, and

means for treating the components in accordance with the output of the photoelectric detection system to ensure that components of the said type arrive at the delivery point only in a predetermined one of the said orientations,

characterised in that the apparatus is suitable for handling a mixture of different types of components for manufacture, in which the form of the output from the photoelectric detection system differing significantly according to the type of component and, for at least one type, whether it has a particular one of said orientations, and

the means for treating the components is constructed and/or adapted to recognise the form of the said output for a plurality of types of component and to ensure that only those components which are of a selected one or more types, and for the said one type in the said one particular orientation only, reach the delivery point.

It is to be understood that in this specification the term light includes ultra-violet and infra-red radiation as well as visible radiation. The term "component for manufacture" in this specification and claims includes components for assembly.

Certain embodiments of the invention will now be described by way of example with reference to the accompanying drawings, in which:-

Figures 1 and 2 are schematic side and plan views of a bowl feeder adapted to form apparatus according to the invention,

Figures 3a and 3b show exemplary waveforms obtained from different components when using apparatus according to the invention,

Figure 4 is a block diagram of an electrical circuit for use in the apparatus of Figures 1 and 2,

Figure 5 is a part circuit part block diagram of part of the, circuit of Figure 4, and

Figure 6 is a block diagram of a microcomputer system which can, be used as an alternative form of part of the circuit of Figure 4.

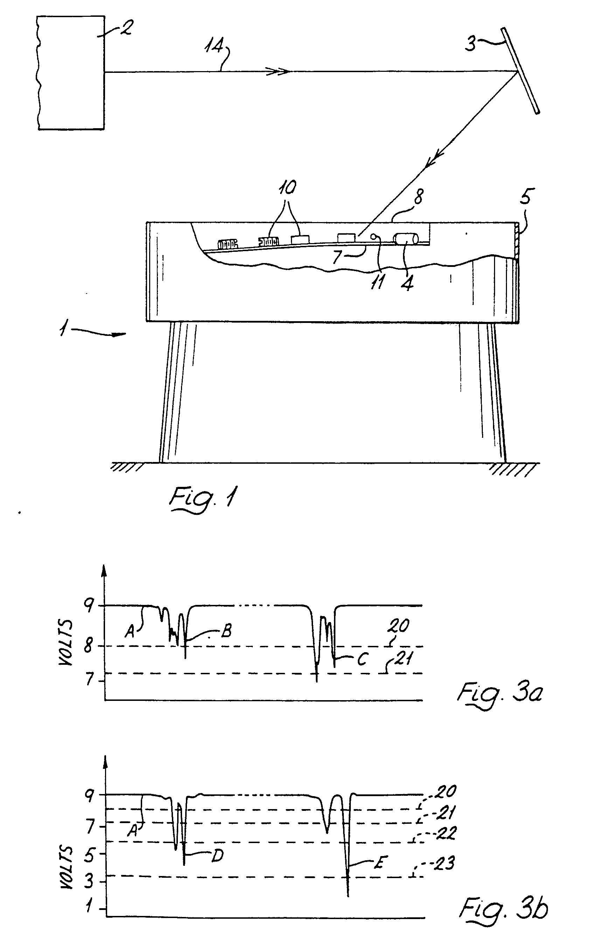

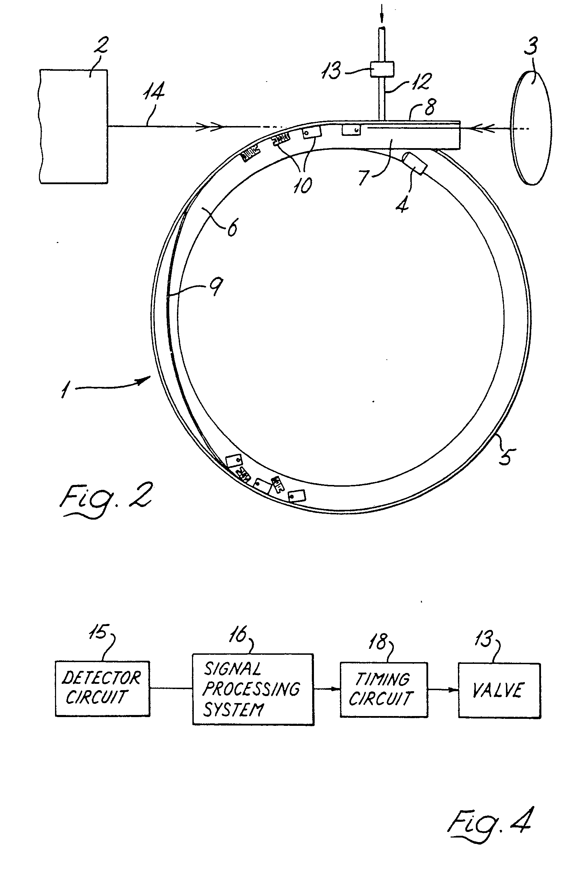

In Figures 1 and 2, vibratory bowl feeder 1 of substantially conventional form has an associated optical system incorporating a low power continuous wave laser source 2, a plane mirror 3 and a phototransistor 4. These components of the optical system are supported by a frame which is omitted from the drawings for the sake of clarity, the frame being fixed relative to the feeder 1. Only a single optical system is shown but several such systems may be used. The feeder 1 has a cylindrical bowl 5 on the interior of which is mounted a track 6 whose upper face is coated with black rubber. The major part of the track 6 is in the form of spiral extending upwards from the base of the bowl 5 at an inclination of 3°, but at its upper end the spiral merges with a straight track section 7 which extends horizontally through a gap formed in the cylindrical wall of the bowl 5 to provide the outlet of the feeder 1. The section 7 is bounded at one side by a vertical wall 8 which constitutes a continuation of the cylindrical wall of the bowl 5.

In use a mixture of components is deposited randomly in the well of the bowl 5, for example a large number of identical grub screws and identical rectangular blocks with small holes near one end may be deposited in the bowl 5. Some mechanical components 10 drawn from this supply are caused to progress up the track 6 in the usual way by virtue of vibratory motion of the bowl 5. Before reaching the section 7 they are reduced to a single file by means of a deflector device 9 (Figure 2) mounted above the track 6; as a result, components 10 which pass the device 9 proceed in turn along a path which extends initially adjacent the cylindrical wall of the bowl 5 and ultimately adjacent the wall 8. In proceeding along this path similar components will have different orientations.

The function of the detector and the processing system is to sense both the type of component and its orientation when the component passes through a defined region of the track. As will be explained more fully below, only those components of a chosen type having a chosen orientation are permitted to reach the outlet of the feeder 1, while the others are caused to be returned from the track 6 to the well of the bowl 5. The removal of unwanted components is effected by an air jet issuing from an orifice 11 (Figure 1) in the wall 8, the orifice 11 communicating with one end of a pipe 12 (Figure 2) whose other end is connected to a compressed air supply (not shown) and which is provided with an electrically operable pneumatic valve 13.

Considering now the arrangement of the optical system, the source 2 (which may suitably incorporate a helium-neon laser having a power rating of 0.5 mW) is arranged to project a light beam 14 (which may typically have a diameter of about 2 mm) horizontally in a vertical plane aligned with the straight portion, extending along the section 7, of the path traversed by the screws 10, the beam 14 being reflected by the mirror 3 so as to be directed downwardly at an angle of about 45° on the same plane and so that it will intersect the straight portion of the path traversed by moving components 10 at a point near that end of the section 7 adjacent the spiral part of the track 6; for the sake of clarity, only part of the horizontal portion of the beam 14 is indicated in Figure 2. As a result, each of the components 10 is temporarily illuminated by the beam 14 shortly after it reaches the section 7, with the geometry being such that the leading end of the component is at first illuminated. Since the components 10 speed up on reaching the horizontal track section 7, they pass through the beam 14 with significant gaps between them even if they were touching one the spiral part of the track 6, so that the illumination of the leading end of each component 10 is not interfered with by the presence of other components on the section 7.

The phototransistor 4 detects light from the beam 14 which is returned from the components 10 by scattering and reflection, and by appropriately positioning the phototransistor 4 it is possible to arrange that the variations in intensity of the detected light resulting from the passage of a particular component 10 will differ significantly according to the geometry and orientation of each component.

Typical results obtainable with such an arrangement are illustrated in Figures 3a and 3b. in which the output of a detector circuit incorporating the phototransistor 4 is plotted against time, the line A representing a background level corresponding to light scattered from the beam 14 by the track 6 in the absence of any components 10. The signals B and C correspond to the passage of screws having the slotted end leading and trailing, respectively, while the signals D and E correspond to the passage of rectangular components having their recessed hole leading and trailing, respectively. These signals may be called the "signatures" which represent both the type of component and its orientation. To use such signals, there is provided an electrical circuit which is diagrammatically illustrated in Figure 4. The phototransistor 4 is coupled to a signal processing system 16 which examines the form of the signatures to determine whether they, in effect, correspond with the reference signature. Appropriate action is then taken according to the sequence of types of components and the orientations required. For example suppose alternate grub screws with slotted enhd leading and rectangular components with the end having the small hole leading are required, then whenever a component corresonding to this sequence is recognised the valve 13 is closed to prevent an air jet issuing from the orifice 11 allowing the component to leave the feeder. At all other times the valve 13 remains open forcing components of the wrong type or in the wrong orientation or in the wrong sequence to leave the track and fall back into the well of the bowl 5.

In the example given the required component type and orientation can be distinguished from the waveforms of Figures 3a and 3b by employing four trigger levels 20 to 23 corresponding to 8, 7.2, 5.9 and 3.5 volts, respectively.

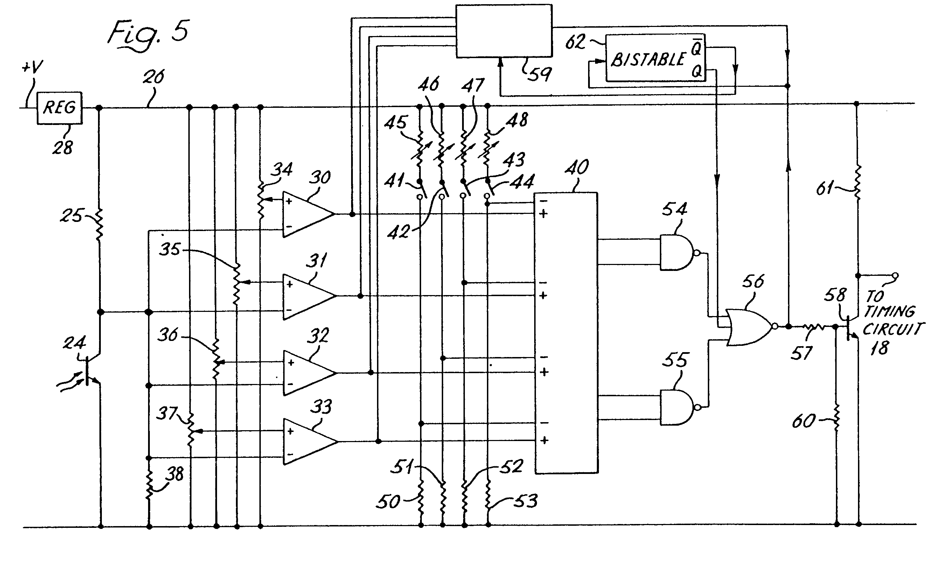

A circuit for distinguishing signatures by means of four trigger levels and which may be used as the signal processing system is shown in Figure 5 together with the detector circuit 15 in the form of a photodiode 24 connected in series with a 2 KΩ resistor 25 between positive and zero supply rails 26 and 27. Voltage is applied to the rail 26 by way of a d.c. voltage regulator 28.

The collector of the photodiode 24 is connected to the inverting inputs of four voltage comparators 30 to 33, each of which has its non-inverting input connected to the tapping point of a respective one of four 5 KΩ adjustable potentionmeters 34 to 37. In addition the non-inverting inputs of the comparators are connected by way of a 4 MΩ resistor 38 to the supply rail 27.

If the output voltage from the photodiode 24 exceeds the voltage applied by way of one of the potentiometers 34 to 37 to one of the comparators 30 to 33 then that comparator provides a greater than zero output voltage to a quad differential comparator 40. The input terminals of the comparator 40 are arranged in pairs and the other input terminal of each pair is connected to a respective one of a group of switches 41 to 44. Each of these switches when closed connects a potentiometer formed by a preset resistor and a 10 KΩ resistor to the comparator 40 and thus by closing the appropriate switch a selected input terminal is either at a voltage which approaches that of the rail 26 or at zero voltage. · The potentiometers are made up of preset resistors 47 to 48 and 10 KΩ resistors 50 to 53.

The quad comparator 40 has four output terminals which are connected to NAND gates 54 and 55 with outputs connected to a NOR gate 56. Thus when all comparators 30 to 33 provide a positive output voltage both the NAND gates 54 and 55 give zero outputs and as a result the NOR gate 56 gives a positive output (ignoring for the moment the third input to this gate). A 1 KΩ resistor 57 couples the output of the gate 56 to the base of a transistor 58 which is connected to the zero voltage rail 27 by means of a 1 MΩ resistor 60. The emitter of the transistor 58 is connected to the timing circuit 18 of Figure 4 so that when the gate 56 provides a positive output the timing circuit 18 receives an input signal causing the valve 13 to close. A 300 KΩ resistor 61 is used as a load resistor for the transistor 58.

If the signature D is to be recognised, the switches 42, 43 and 44 are closed and the potentiometers 34, 35 and 36 are adjusted to give output voltages corresponding to the trigger levels 21, 22 and 23 respectively. With the circuit of Figure 5 set up in this way the NAND gates 54, 55 and the NOR gate 56 ensure that the timing circuit 18 only receives an output pulse if the three trigger levels 20, 21 and 22 are exceeded at the same time but the trigger level 23 is not then exceeded. This is the condition required to recognise the signature of a rectangular component with hole leading.

In one arrangement, one circuit portion as shown connected between the output of the amplifiers 30 to 33 and the resistor 57 is required for each signature which is to be recognised. Thus if a sequence of two components each in a particular orientation is required, the above mentioned circuit portion is duplicated as indicated by the designation 59 and the additional portion is set up to recognise another signature corresponding to a different component type and orientation. The NOR gate 56 and a corresponding gate in the circuit portion 59 have third inputs coupled to the Q and $\overline{Q}$ respectively outputs of a bistable circuit 62. The input of the bistable circuit is connected to the output of both the gate 56 and the corresponding gate so that esch time one component in the correct sequence is recognised the bistable changes state and enables the gate 56 or the corresponding gate with the result that the other component is the next selected. The recognition of more complicated sequences of signatures is a simple matter of extension of this type of logic circuit.

In an alternative arrangement, the switches 41 to 44 which may be semiconductor switches are reset after one component has been selected according to the signature of the next component required. A controlling bistable circuit or counter for more than two-component sequences and associated logic may be used for this purpose.

In setting potentiometers 34 to 37 a storage oscilloscope may be connected between the collector of the photodiode 24 and the supply rail 27. Components of the types to be recognised are then passed along the track section 7 in their various orientations and each signature is captured on the oscilloscope to allow suitable trigger levels to be decided. The potentiometers 34 to 37 and the switches 41 to 44 are then adjusted to provide output voltages corresponding to the selected trigger levels.

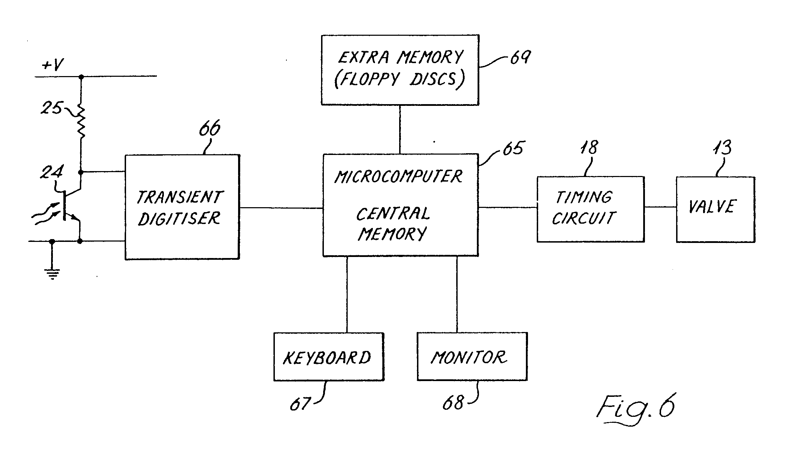

As an alternative to the logic circuit of Figure 5 a circuit which uses a microcomputer 65 (Figure 6) may he used. The collector of the phototransistor 24 is connected to a transient digitiser circuit 66 which supplies waveform samples for the microcomputer to store. The transient digitiser is triggered by a circuit (not shown) which provides a triggering signal when the voltage at the collector of the phototransistor 24 departs from its normal value A. The digitiser 66 may for example provide 256 waveform samples with a 8 bit accuracy over the maximum expected interval of signature waveform.

Considering the typical signatures of Figures 3a and 3b, four standard waveforms may be generated either by running each component with a different orientation along the track section 7 or, if this has previously been carried out, by recalling standard waveforms recorded on tape or disc.

The microcomputer 65 is programmed to compare any waveform received during operation of the bowl feeder with a standard waveform and if there is a correspondence with a desired orientation a signal is sent to the timing circuit 18 to close the pneumatic valve 13. If a received waveform is not one which corresponds to the desired component with the orientation required at the moment the valve 18 remains open and the component is rejected.

The waveform comparison may be carried out on the basis of trigger levels, for example as indicated in Figures 3a and 3b, but as exemplary alternatives the microcomputer may be programmed to carry out recognition by comparing areas between the signature waveform and a datum such as the waveform level existing when no component is present or, at the expense of more computer time, comparing waveform shapes point by point. In each case some appropriate tolerance between incoming and standard waveforms is, of course, required, such as ±10% for area, or rejection if any point has a value ±10% different from the corresponding point in a standard waveform.

A keyboard 67 and a monitor 68 are provided to set up the microcomputer when using a stored program and to display waveforms, respectively, in carrying out the setting up procedure. The keyboard may also be used to develop or modify stored programs to allow for different types of components and resultant signatures, and extra memory 69. in the form of floppy discs, may be provided to store a number of different programs which can be called on to suit components to be handled. A total of about 8 k bits (or bytes) is adequate to store four standard waveforms, that is about 2 k bits (or bytes) for each waveform. The software is estimated to require about 10 k bits (or bytes) so that a total computer memory of about 18 k bits (or bytes) is required and as such is well within the limits of, for example, the BBC Model B microcomputer using a BASIC language.

An outline example of programming the microcomputer 65 is now given and it will be clear from this example that more detailed programming is a straightforward programming task.

An outline program for storing standard waveforms is first described:

(1) With one component orientation, generate, for example 10, similar waveforms

(2) Average this waveform to give WAS1

(3) Repeat (1) with each other component orientation, generating WAS2, WAS3, WAS4, ....

(4) Retain WAS1, WAS2, WAS3, WAS4, in permanent store

(5) Repeat (1) to (4) with other components B, C, D to obtain waveforms WBS1-WBSn, WCS1-WCSn, and WDS1-WSSn.

An outline program for selecting a sequence of component types in selected orientations is now described:-

(1) Enter selected sequence of component types A, B, C, D, e.g. sequence BADC

(2) Enter selected orientation for each type (1, 2, 3 or 4)

e.g. B : 2

A : 1

D : 2

C : 4

(3) Select basis for accepting components of one type

Maximum excursion of waveform -GOTO (4)

Entire waveform -GOTO (6)

Area under waveform -GOTO (6)

(4) Find maximum excursion of stored standard waveform for specific type of component in selected orientation and assign as PS followed by designation of type and orientation, e.g. PSB2

(5) Assign toleration for maximum excursion -GOTO (10)

(6) Assign address pointer to address of stored standard waveform for specific type of component in required orientation

(7) Assign tolerance limits to each data point -GOTO (10)

(8) Integrate waveform of specific component type in required orientation by summing all the data points of the waveform. Assign as I followed by component and orientation designations, e.g. ID2

(9) Assign tolerance for limits for waveform area (10) If basis of selection for all types of component not completed -GOTO (3)

(11) Ready to operate

(12) Use entered sequence of component types and orientations to point to next type of component required and orientation, e.g. B2

(13) Jump to test type for required component

Maximum excursion - GOTO (14)

Entire waveform - GOTO (19)

Area - GOTO (23)

(14) Capture waveform of next component

(15) Find maximum excursion of captured waveform assign as PSC

(16) Compare PSC with previously assigned value of PS, e.g. PSB2

(17) If outside tolerance - GOTO (14)

(18) If within tolerance - GOTO (28)

(19) Capture waveform of next component

(20) Use above mentioned address pointer to select respective points in stored standard waveform and compare with corresponding points in captured waveform

(21) If any comparison of corresponding points is outside tolerance - GOTO (19)

(22) If every comparison of corresponding points is within tolerance - GOTO (28)

(23) Capture waveform of next component

(24) Integrate captured waveform -assign as IC

(25) Compare IC with assigned value of I, e.g. ID2

(26) If outside tolerance - GOTO (23)

(27) If within tolerance - GOTO (28)

(28) Signal timing circuit 18 to close valve 13

(29) If more components are to be fed - GOTO (12)

(30) Stop if end of feeding operation.

Although the apparatus illustrated in the drawings has been described as specifically adapted for use in the handling of grub screws and rectangular components, it may be regarded as illustrative of a general type of apparatus which can be utilised in a similar way in the handling of various types of small mechanical component. For use with a given set of components, it will of course normally be desirable to ensure the most favourable conditions for discrimination between different possible components with their possible orientations by virtue of the "signatures" constituted by the forms of the signals derived from the detection system. This will commonly require the geometrical layout of the optical system to be varied from the specific form described above and illustrated in the drawings, and in some cases it may be appropriate to incorporate additional components in the optical system; for example lenses may be included to vary the shape of the illuminating beam and/or modify the field of view of the detection system, and it may be desirable to provide discrimination against the effects of ambient light by including in the detection system a filter having a narrow transmission bandwidth matched to the wavelength of the laser. Key features of the "signatures" are of course likely to depend on aspects of the shape of the relevant types of component which will give rise to differences in the intensity of light scattered and/ or reflected in a given direction from a component for different attitudes of presentation to the light beam. It will usually be possible to optimise the differences by appropriate choice, after trials, of factors such as the direction of incidence and shape of the illuminating beam, and the viewing direction and field of view of the detection system.

Having regard to the considerations discussed above, it will be appreciated that it is possible to provide an apparatus similar to that illustrated in the drawings which, by incorporating provision for adjustment of appropriate parameters of the optical system and the electrical circuit, is adaptable for use with a variety of types of component.

## Claims

1. A method of handling objects comprising feeding the objects sequentially towards a delivery point in such a manner that each object assumes any one of a small number of different stable orientations,

subjecting each object before it reaches the delivery point to an optical test in which the object is illuminated by a beam of light (14) while it moves relative to the light beam, and in which an output is derived from a photoelectric detection system (4, 24) responsive to light which is scattered and/or reflected by objects so illuminated, and

treating the objects to ensure that they reach the delivery point in a predetermined orientation only, characterised in that

the objects are different types of components (10) for manufacture,

the form of the said output differs significantly according to the type of component (10) and, for at least one type, whether it has a particular one of said orientations, and in that the method includes

treating the components (10) in accordance with the results of the tests to ensure that only those components which are of a selected one or more types and, for the said one type, in the said particular one of said orientations, reach the delivery point.

2. A method according to Claim 1 characterised by treating the components (10) in accordance with the results of the tests to cause components to reach the delivery point in a predetermined sequence of different selected types of components.

3. A method according to Claim 1 or 2 characterised in that a plurality of different types of components (10) are fed towards the delivery point and can each assume any one of a small number of different stable orientations, the form of the output of the photoelectric detection system (4, 24) for each of the said plurality of types of components differs significantly according to whether or not a component of that type has a predetermined one of the said orientations corresponding to that type, and, in treating the components in accordance with the results of the test, each of the plurality of the components reaches the delivery point only in the predetermined orientation corresponding to that type.

4. Apparatus for use in handling objects comprising means (5) for feeding components (10) sequentially towards a delivery point in such a manner that at least one type of component assumes any one of a small number of different stable orientations,

means (2) for projecting a beam of light (14) to illuminate components as they move towards the delivery point,

a photoelectric detection system (4, 24) responsive to light scattered and/or reflected by components so illuminated, and

means (12, 13, 16, 18) for treating the components in accordance with the output of the photoelectric detection system (4, 24) to ensure that components of the said type arrive at the delivery point only in a predetermined one of the said orientations,

characterised in that the apparatus is suitable for handling a mixture of different type of components (10) for manufacture, in which the form of the output from the photoelectric detection system (4, 24) differs significantly according to the type of component and, for at least one type, whether it has a particular one of said orientations, and

the means (12, 13, 16, 18) for treating the components is constructed and/or adapted to recognise the form of the said output for a plurality of types of component and to ensure that only those components which are of a selected one or more types, and for the said one type in the said one particular orientation only, reach the delivery point.

5. Apparatus according to Claim 4 characterised in that the means (12, 13, 16, 18) for treating components ensures that components reach the delivery point in a predetermined sequence of different selected types of component.

6. Apparatus according to Claim 4 or 5 for use where a plurality of different types of components are to be fed towards the delivery point, characterised in that the means (5) for feeding components is arranged to cause each component to assume any one of a small number of different stable orientations, the form of the output of the photoelectric detection system (4, 24) for each of the different types of components differs significantly according to whether or not a component of that type has a predetermined one of said orientations corresponding to that type, and the means (12, 13, 16, 18) for treating components causes the components to reach the delivery point only in the predetermined orientation corresponding to that type.

7. Apparatus according to any of Claims 4 to 6 characterised in that the means for feeding components (5) comprises a vibratory bowl feeder.

8. Apparatus according to any of Claims 4 to 7 characterised in that the means (12, 13, 16, 18) for treating components includes a plurality of discrimination means (30, 31, 32, 33, 40, 54, 55, 56, 59, 62) for indicating when the output from the photoelectric detection system (4, 24) reaches first and second adjustable voltage levels, respectively, and for preventing a component reaching the delivery point unless the output signal from the photoelectric system which occurs when that component is fed towards the delivery point reaches one said voltage level but not the other, and means (41 to 48) for enabling the discrimination means in a selectable sequence to cause components to reach the delivery point in such a sequence.

9. Apparatus according to any of Claims 4 to 7 characterised in that the means (12, 13, 16, 18) for treating components includes a computer (65, 69) programmed to assist in ensuring that only required types of components in required sequences and at least one orientation reach the delivery point by comparing a representation of each waveform from the output of the photoelectric system (4, 24) which occurs when a component is fed towards the delivery point with stored representations of waveforms previously derived from the output of the photoelectric system (4, 24,) when the required types of components at least one in the required orientation were fed towards the delivery point.

10. Apparatus according to Claim 9 characterised in that waveform representations are compared according to one of the following:-

peak levels reached (in either polarity), area between a waveform and a datum, and proximity of selected waveform points.

## Patentansprüche

1. Verfahren zur Handhabung von Objekten, bei dem die objekte nacheinander in der Weise zu einem Auslieferungspunkt gefördert werden, daß jedes Objekt irgend- eine aus einer kleinen Anzahl von verschiedenen stabilen Orientierungen einnimmt,

jedes Objekt vor Erreichen des Auslieferungspunkts einer optischen Prüfung unterzogen wird, bei der es von einem Lichtstrahl (14) beleuchtet wird, während es sich relativ zu diesem Lichtstrahl bewegt, und ein Ausgangs-signal aus einem fotoelektrischen Detektorsystem (4, 24) abgeleitet wird, das von dem Licht abhängig ist, das von in dieser Weise beleuchteten Objekten gestreut und/oder reflektiert wird,

und auf die Objekte eingewirkt wird, um sicherzustellen, daß sie den Auslieferungspunkt nur in einer vorbestimmten orientierung erreichen,

dadurch gekennzeichnet,

daß die Objekte verschiedene Arten von Bauteilen (10) für die Produktion sind,

daß die Form des genannten Ausgangssignals in Abhängigkeit von dem Typ des Bauteils (10) und für wenigstens einen Typ in Abhängigkeit davon, ob es eine bestimmte der genannten orientierungen hat, signifikant differiert,

und daß das Verfahren ein Einwirken auf die Bauteile (10) in Abhängigkeit von den Ergebnissen der Prüfungen umfaßt, um sicherzustellen, daß nur diejenigen Bauteile, die einem ausgewählten Typ oder einem von mehreren Typen angehören, in der genannten bestimmten Orientierung den Auslieferungspunkt erreichen.

2. Verfahren nach Anspruch 2, dadurch gekennzeichnet, daß auf die Bauteile (10) in Abhängigkeit von den Ergebnissen der Prüfungen so eingewirkt wird, daß Bauteile den Auslieferungspunkt in einer vorbestimmten Sequenz von verschiedenen ausgewählten Typen von sauteilen erreichen.

3. Verfahren nach Anspruch 1 oder 2, dadurch gekennzeichnet, daß eine Vielzahl unterschiedlicher Typen von Bauteilen (10) in Richtung auf den Auslieferungspunkt gefördert wird, die jeweils eine aus einer kleinen Anzahl von verschiedenen stabilen orientierungen haben können, wobei die Form des Ausgangssignals des fotoelektrischen Detektorsystems (4, 24) für jeden aus der genannten Vielzahl von Typen von Bauteilen in Abhängigkeit davon, ob ein Bauteil dieses Typs eine vorbestimmte Orientierung aus der Anzahl der diesem Typ entsprechenden Orientierungen aufweist oder nicht, signifikant differiert, und daß auf die Bauteile in Abhängigkeit von den Ergebnissen der Prüfung so eingewirkt wird, daß jedes Bauteil aus der Anzahl von Bauteilen den Auslieferungspunkt nur in der seinem Typ entsprechenden vorbestimmten orientierung erreicht.

4. Gerät zur Handhabung von Objekten mit Mitteln (5) für das nacheinander erfolgende Fördern von Bauteilen in Richtung auf einen Auslieferungspunkt in der Weise, daß wenigstens ein Bauteiletyp irgendeinen aus einer kleinen Anzahl von verschiedenen stabilen Orientierungen einnimmt,

mit Mitteln (2) zum Projizieren eines Lichtstrahls (14) zum Beleuchten von Bauteilen, wenn diese sich in Richtung auf den Auslieferungspunkt bewegen,

mit einem fotoelektrischen Detektorsystem (4, 24), das auf Licht anspricht, das von so beleuchteten Bauteilen gestreut und/oder reflektiert wird,

sowie mit Mitteln (12, 13, 16, 18) zur Einwirkung auf die Bauteile in Abhängigkeit von dem Ausgangssignal des fotoelektrischen Detektorsystems (4, 24), um sicherzustellen, daß Bauteile des genannten Typs nur in einer bestimm- ten von den genannten unterschiedlichen orientierungen den Auslieferungspunkt erreichen,

dadurch gekennzeichnet,

daß das Gerät zur Handhabung einer Mischung von unterschiedlichen Typen von Bauteilen (10) für die Produktion geeignet ist, bei denen die Form des Ausgangssignals des photoelektrischen Detektorsystems (4, 24) sich in Abhängigkeit von dem Bauteiletyp und für wenigstens einen Typ in Abhängigkeit davon signifikant differiert, ob das betreffende Bauteil eine bestimmte der genannten Orientierungen einnimmt,

und daß die Mittel (12, 13, 16, 18) zur Einwirkung auf die Bauteile so konstruiert und/oder angepaßt sind, daß sie die Form des genannten Ausgangssignals für eine Vielzahl von Bauteiletypen erkennen und sicherstellen können, daß nur diejenigen Bauteile, die einem ausgewählten Typ oder einem von mehreren ausgewählten Typen angehören, in der genannten bestimmten orientierung den Auslieferungspunkt erreichen.

5. Gerät nach Anspruch 4, dadurch gekennzeichnet, daß die Mittel (12, 13, 16, 18) zur Einwirkung auf die Bauteile sicherstellen, daß Bauteile den Ausgangspunkt in einer vorbestimmten Sequenz von unterschiedlichen ausgewählten Bauteiletypen erreichen.

6. Gerät nach Anspruch 4 oder 5 zur Anwendung in Fällen, in denen eine Mehrzahl unterschiedlicher Bauteiletypen zu dem Auslieferungspunkt gefördert werden sollen,

dadurch gekennzeichnet,

daß die Mittel (5) zum Fördern der Bauteile so angeordnet sind, daß sie jedes Bauteil veranlassen können, daß es eine aus einer kleinen Anzahl von unterschiedlichen stabilen Orientierungen einnimmt,

daß die Form des Ausgangsignals des photoelektrischen Detektorsystems (4, 24) für jeden der unterschiedlichen Bauteiletypen in Abhängigkeit davon, ob ein Bauteil dieses Typs eine vorbestimmte Orientierung sus der genannten Anzahl unterschiedlicher Orientierungen einnimmt oder nicht, signifikant differiert,

und daß die Mittel (12, 13, 16, 18) zur Einwirkung auf die Bauteile bewirken, daß die Bauteile den Auslieferungspunkt nur in der dem betreffenden Typ entsprechenden vorbestimmten Orientierung erreichen.

7. Gerät nach einen der Ansprüche 4 bis 6, dadurch gekennzeichnet, daß die Mittel (5) zum Fördern der Bauelemente einen Vibrationsschalenförderer umfassen.

8. Gerät nach einem der Ansprüche 4 bis 7, dadurch gekennzeichnet,

daß die Mittel (12, 13, 16, 18) zur Einwirkung auf die Bauteile eine Mehrzahl von Diskriminatoren (30, 31, 32, 33, 40, 54, 55, 56, 59, 62) aufweisen, die anzeigen, wenn das Ausgangssignal des photoelektrischen Detektorsystems (4, 24) erste bezw. zweite einstellbare Spannungspegel erreicht, und verhindern, daß ein Bauteil den Auslieferungspunkt erreicht, außer wenn das bei der Förderung des Bauteils in Richtung auf den Auslieferungspunkt auftretende Ausgangssignal des photoelektrischen Detektorsystems einen dieser Spannungspegel, jedoch nicht den anderen erreicht,

und daß die Mittel zur Behandlung von Bauteilen außer dem Mittel (41 bis 48) umfassen, die die Diskriminatoren in einer wählbaren Sequenz aktivieren und dadurch bewirken, daß Bauteile den Auslieferungspunkt in einer solchen Sequenz erreichen.

9. Gerät nach einem der Ansprüche 4 bis 7, dadurch gekennzeichnet, daß die Mittel (12, 13, 16, 18) zur Behandlung von Bauelementen einen Computer (65, 69) umfassen, der so programmiert ist, daß er dazu beiträgt, sicherzustellen, daß nur geforderte Bauteile in geforderten Sequenzen und wenigstens einer Orientierung den Auslieferungspunkt erreichen, indem eine Darstellung jeder Wellenform des bei der Förderung eines Bauteils in Richtung auf den Auslieferungspunkt auftretenden Ausgangssignals des photoelektrischen Detektorsystems (4, 24) mit gespeicherten Darstelluhngen von wellenformen verglichen wird, die zuvor aus dem Ausgangssignal des photoelektrischen Detektorsystems (4, 24) abgeleitet wurden, während die geforderten Typen von Bauteilen, mit wenigstens einem in der geforderten Orientierung in Richtung auf den Auslieferungspunkt gefördert wurden.

10. Gerät nach Anspruch 9, dadurch gekennzeichnet, daß Wellenform-Darstellungen nach wenigstens einem der folgenden Kriterien verglichen werden:

erreichte Spitzenpegel (in beiden Polaritäten).

Fläche zwischen einer Wellenform und einer gegebenen Größe und

Nähe ausgewählter Wellenform-Punkte.

**Revendications**

1. Procédé de manutention d'objets, comprenant l'avance des objets successivement vers un point de délivrance, de manière que chaque objet ne prenne qu'une orientation quelconque parmi un petit nombre d'orientations stables différentes,

la soumission de chaque objet, avant qu'il n'atteigne le point de délivrance, à un essai optique au cours duquel l'objet est éclairé par un faisceau de lumière (14) pendant qu'il se déplace par rapport à ce faisceau de lumière, et dans lequel un signal de sortie est obtenu d'un système (4, 24) photo-électrique de détection, sensible à de la lumière qui est diffusée ou dispersée et/ou réfléchie par les objets ainsi éclairés, et

le traitement des objets pour garantir qu'ils n'atteignent qu'en une orientation prédéterminée seulement le point de délivrance,

procédé caractérisé en ce que les objets sont différents types de composants (10) pour une fabrication,

la forme de ce signal de sortie diffère nettement selon le type de composant (10) et, pour au moins un type, selon qu'il présente une, particulière, desdites orientations, et en ce que le procédé comprend

le traitement des composants (10) selon les résul- tats des essais, pour garantir que seuls les . composants qui appartiennent un ou plusieurs types choisis et, pour ledit type, qui se trouvent en ladite orientation particulière parmi lesdites orientations, atteignent le point de délivrance.

2. Procédé selon la revendication 1, caractérisé en ce qu'on traite les composants (10) selon les résultats des essais afin d'obtenir que les composants atteignent le point de délivrance en une séquence prédéterminée de différents types choisis de composants.

3. Procédé selon la revendication 1 ou 2, caractérisé en ce que plusieurs composants (10) de types différents sont acheminés vers le point de délivrance et chacun ne peut prendre qu'une orientation quelconque parmi un petit nombre d'orientations stables différentes; la forme du signal de sortie du système (4, 24) photo-électrique de détection diffère nettement, pour chacun desdits divers types de composants, selon, ou non, qu'un composant de ce type présente l'une, prédéterminée, de ces orientations correspondant à ce type et, en traitant les composants selon les résultats de l'essai, on obtient que chacun des divers composants n'atteint le point de délivrance qu'en l'orientation prédéterminée correspondant à ce type.

4. Appareil destiné à servir à la manutention d'objets, comprenant

un moyen (5) pour acheminer des composants (10) successivement vers un point de délivrance, de manière qu'au moins un type de composant ne présente qu'une quelconque orientation parmi un petit nombre de différentes orientations stables possibles,

un moyen (2) pour projeter un faisceau de lumière (14) pour éclairer les composants pendant qu'ils de déplacent vers le point de délivrance,

un système (4, 24) photo-électrique de détection, sensible à la lumière diffusée, diffractée et/ou réfléchie par les composants ainsi éclairés, et

des moyens (12, 13, 16, 18) pour traiter les composants selon le signal de sortie du système (4, 24) photo-électrique de détection pour garantir que les composants dudit type arrivent au point de délivrance seulement en l'une, prédéterminée, desdites orientations, appareil caractérisé en ce qu'il convient pour la manutention de traitement d'un mélange de différents types de composants (10) pour la fabrication, la forme du signal de sortie provenant du système (4, 24) photo-électrique de détection différant nettement selon le type de composant et, pour au moins un type, selon qu'il possède, l'une, particulière, desdites orientations, et

en ce que le moyen (12, 13, 16, 18) pour traiter les composants est construit et/ou adapté de manière à reconnaître la forme dudit signal de sortie pour plusieurs types de composants, et à garantir que seuls les compo- sants qui appartiennent à un ou plusieurs types choisis et, pour ce type, qui se trouvent dans ladite orientation particulière seulement, atteignent le point de délivrance.

5. Appareil selon la revendication 4. caractérisé en ce que le moyen (12, 13, 16, 18) pour traiter des composants garantit que les composants atteignent le point de délivrance en une séquence prédéterminée de différents types choisis du composant.

6. Appareil selon la revendication 4 ou 5, destiné à servir lorsque plusieurs composants de types différents doivent être acheminés vers le point de délivrance, appareil caractérisé en ce que le moyen (5) pour acheminer les composants est agencé de manière à obtenir que chaque composant ne prenne qu'une seule orientation quelconque parmi un petit nombre possible de différentes orientations stables, la forme du signal de sortie du système (4, 24) photo-électrique de détection différant, pour chacun des différents types de composants, nettement selon qu'un composant de ce type a ou n'a pas l'une, prédéterminée, desdites orientations correspondant à ce type, et en ce que le moyen (12, 13, 16, 18) pour traiter les composés obtient que les composants n'atteignent le point de délivrance qu'en étant dans l'orientation prédéterminée correspondant à ce type.

7. Appareil selon l'une quelconque des revendications 4 à 6, caractérisé en ce que le moyen pour acheminer les composants (5) comprend un dispositif d'avance ou d'alimentation à cuvette vibrante.

8. Appareil selon l'une quelconque des revendications 4 à 7, caractérisé en ce que le moyen (12, 13, 16, 18) pour traiter des composants comprend plusieurs moyens (30, 31, 32, 33, 40, 54, 55, 56, 59, 62) de discrimination pour indiquer lorsque le signal de sortie provenant du système (4, 24) photo-électrique de détection atteint des premier et second niveaux de tension ajustable, respectivement, et pour ne permettre à un composant d'atteindre le point de délivrance que si le signal de sortie provenant du système photo-électrique, qui se produit lorsque ce composant est acheminé vers le point de délivrance, atteint l'un desdits niveaux de tension mais non pas l'autre, et un moyen (41 à 48) pour permettre au moyen de discrimination d'obtenir, dans une séquence · pouvant être choisie, que des composants atteignent en une telle séquence le point de délivrance.

**0 121 390**

9. Appareil selon l'une quelconque des revendications 4 à 7, caractérisé en ce que le moyen (12, 13, 16, 18) pour traiter des composants inclut un ordinateur (65, 69) programmé pour contribuer à garantir que seuls des types requis de composants, en des séquences requises, et en au moins une orientation' atteignent le point de délivrance, en comparant une représentation de chaque forme d'onde du signal de sortie du système (4, 24) photo-électrique qui se produit, quand un composant est acheminé vers le point de délivrance avec, en mémoire, des représentations de formes d'ondes obtenues précédemment du signal de sortie du systéme (4, 24) photo-électri-

que quand les types de composants se présentant en au moins l'une des orientations requises ont été acheminés vers le point de délivrance.

10. Appareil selon la revendication 9, caractérisé en ce que les représentations des formes d'ondes sont comparées selon l'une quelconque des caractéristiques suivantes:

niveaux de crête atteints (dans l'une ou l'autre polaritè)

aire de surface entre une forme d'onde et un repère, et

proximité des points de formes d'ondes choisies.

*Fig. 1*

*Fig. 3a*

*Fig. 3b*

Fig. 2

| DETECTOR CIRCUIT | SIGNAL PROCESSING SYSTEM | TIMING CIRCUIT | VALVE |

Fig. 4

2

Fig. 5

0 121 390

Fig.6

0 121 390